# EUROPEAN PATENT SPECIFICATION

(11) **EP 1 111 952 B1**
(45) Date of publication and mention of the grant of the patent: **03.03.2004**
(21) Application number: 00660238.7
(22) Date of filing: 21.12.2000
(51) Int. Cl.: H04Q 7/38

(54) **Method for transmitting an encryption number in a communication system and a communication system**
Verfahren zur Übertragung einer Verschlüsselungszahl in einem Kommunikationssystem und ein Kommunikationssystem
Procédé pour transmettre un numéro d'encryptage dans un système de communication et système de communication

(30) Priority: 22.12.1999 FI 992769
(43) Date of publication of application: 27.06.2001
(73) Proprietor: Nokia Corporation, 02150 Espoo (FI)
(72) Inventor: Salokannel, Juha, 36240 Kangasala (FI)
(74) Representative: Pursiainen, Timo Pekka

(56) References cited:
- WO-A-00/49827
- US-A- 5 243 653
- US-A- 5 546 464
- YI CHENG ET AL: "Token based authentication for handover security" SECURE INFORMATION NETWORKS. COMMUNICATIONS AND MULTIMEDIA SECURITY, 20 September 1999 (1999-09-20), pages 231-243, XP002169203 Leuven, Belgium

## Description

The present invention relates to a method for transmitting an encryption number in a communication system as set forth in the preamble of the appended claim 1. The invention also relates to a communication system as set forth in the preamble of the appended claim 8.

There are various wireless communication systems under development for implementing wireless communication systems for an office environment, so-called local area networks (LAN). Several wireless communication systems are based on the use of radio signals in communication. One such communication system based on radio communication is the so-called HIPERLAN (High PErformance Radio Local Area Network). Such a radio network is also called a broadband radio access network (BRAN).

In version 2 of the HIPERLAN communication system under development, the aim is to achieve a data transmission rate of even more than 30 Mbit/s, the maximum connection distance being some tens of metres. Such a system is suitable for use in the same building e.g. as an internal local area network for one office. There is also a so-called HIPERACCESS communication system under development, in which the aim is to achieve the same data transmission rate as in said HIPERLAN/2 communication system, but the aim is to achieve a connection distance of several hundreds of metres, wherein the HIPERACCESS system is suitable for use as a regional local area network for example in schools and larger building complexes.

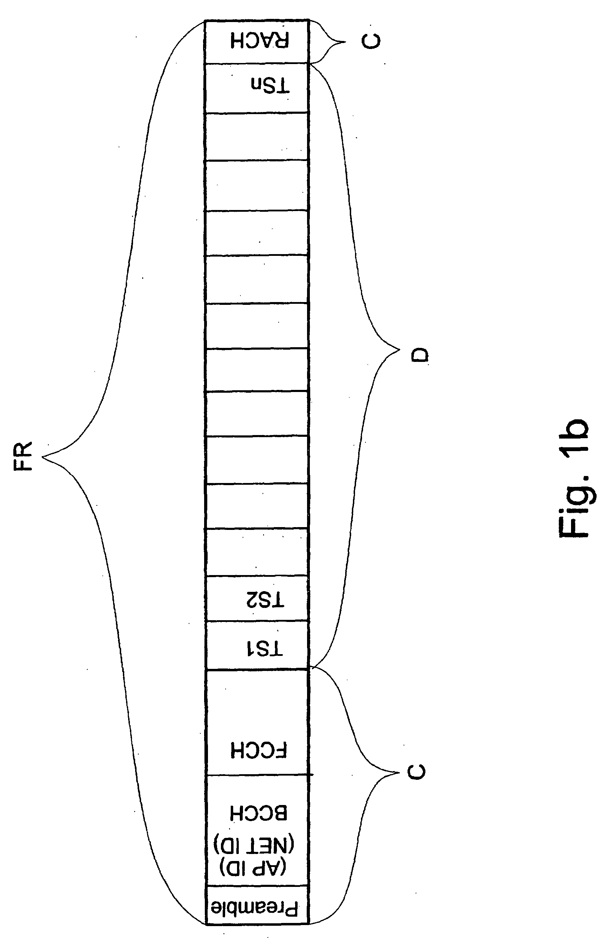

In the HIPERLAN/2 system which is used as an example, the MAC (Medium Access Control) frame structure used in the data link layer DLC is shown in a reduced manner in the appended Fig. 1b. The data frame FR consists of control fields C, such as RACH (Random Access CHannel), BCCH (Broadcast Control CHannel) and FCCH (Frame Control CHannel), as well as a data field D which comprises a given number of time slots TS1, TS2, ..., TSn, in which it is possible to transmit actual payload information.

Each control field C as well as the packets to be transmitted in the time slots of the data field preferably comprise error checking data which has been calculated by an access point AP1 transmitting the data frame and added into the control fields C of the data frame and to the packets to be transmitted in the time slots TS1, TS2, ..., TSn. This checking data is preferably a checksum calculated on the basis of information contained in said field, such as CRC (Cyclic Redundancy Check). In the receiving mobile terminal MT1, it is possible to use the error checking data to examine if the data transmission possibly contained any errors. There can also be several items of such error checking data in the field C, D, calculated on part of the information contained in the field. For example in the HIPERLAN/2 system, the FCCH control field consists of smaller information elements, for which error checking data is calculated respectively. The number of these information elements may vary in each data frame. All data frames do not necessarily have an FCCH control field, in which case the number of information elements is zero.

Communication in the HIPERLAN/2 system is based on time division multiple access TDMA, wherein there can be several connections simultaneously on the same channel, but in said frame each connection is allotted a time slot of its own, in which data is transmitted. Because the quantity of data to be transmitted is usually not constant in all the simultaneous connections, but it varies in time, a so-called adapted TDMA method is used, in which the number of time slots to be allocated for each data transmission connection may vary from zero to a maximum, depending on the loading situation at each time as well as on the data transmission capacity allocated for the connection.

For the time division multiple access to work, the terminals coupled to the same node must be synchronized with each other and with the transmission of the node. This can be achieved for example in such a way that the receiver of the mobile terminal receives signals on a channel. If no signal is detected on the channel, the receiver shifts to receive on another channel, until all the channels are examined or a channel is found on which a signal is detected that is transmitted from an access point. By receiving and demodulating this signal, it is possible to find out the time of transmission of the control channel BCCH of the access point in question and to use this to synchronize the terminal. In some cases, the terminal may detect a signal from more than one access points, wherein the terminal preferably selects the access point with the greatest signal strength in the receiver and performs synchronization with this access point.

After the terminal has been synchronized with the access point, the terminal can start a connection set-up to couple to this access point. This can be performed preferably so that the terminal transmits a connection set-up request to the access point on the RACH control channel. In practice, this means that the terminal transmits in a time slot allocated for the RACH control channel and the access point simultaneously listens to communication on the channel, *i*.*e*. receives signals on the channel frequency used by the same. After detecting that a terminal is transmitting a connection set-up request message, the access point takes the measures required for setting up the connection, such as resource allocation for the connection, if possible. In the resource allocation, the quality of service requested for the connection is taken into account, affecting *e.g*. the number of time slots to be allocated for the connection. The access point informs the terminal if the connection set-up is possible or not. If it has been possible to set up a connection, the access point transmits in the BCCH control field information *e.g.* on the transmission time slots, receiving time slots, connection identifier, *etc*. allocated for the connection. The number of transmission and receiving time slots is not necessarily the same, because in many cases the quantity of information to be transmitted is not the same in both directions. For example, when an Internet browser is used, considerably less information is transmitted from the terminal than information is received at the terminal. Thus, for the terminal, fewer transmission time slots are needed than receiving time slots. Furthermore, the number of time slots allocated for the connection may preferably vary in different frames according to the need to transmit information at the time. The access point controller is provided with a so-called scheduler, which serves *e.g*. the purpose of allocating time slots for different connections as mentioned above. The scheduler is implemented preferably in an application program in the access point controller.

Because full-duplex communication is needed in local area networks, also a full-duplex data transmission connection is needed on the radio channel. In a time division system, this can be implemented either in such a way that some of the time slots in a frame are allocated for transmission from the mobile terminal to the access point (uplink) and some are allocated for transmission from the access point to the mobile terminal (downlink), or in such a way that a separate frequency band is allocated for each communication direction. In the HIPERLAN/2 system, the introduction of the first mentioned method is proposed, wherein the access point and the terminals coupled therewith do not transmit simultaneously.

When the data transmission is being set up, the mobile terminal is listening to find out which access points have signals to be received. The mobile terminal advantageously measures the strength of the signals and selects the access point whose signal is the strongest at the moment. Thereafter the mobile terminal and the access point conduct connection set-up signalling for instance to transmit parameters such as the required data transmission rate, connection type, data transmission channel, time slots, and connection identifier to be used in the connection.

Typically also during the connection, the mobile terminal measures the strength of the signal of the access point used in the connection as well as the strength of the signals of the other possible access points within the coverage area. If it is detected that the signal strength of another access point is sufficiently greater than the signal strength of the access point used at that particular moment, it is possible to conduct a handover to this access point, which is known as such.

The HIPERLAN/2 communication system comprises an access point AP, an access point controller APC, and mobile terminals MT. Furthermore, the HIPELAN/2 system can be arranged in a data transmission connection with other communication systems, such as public switched and mobile telecommunication networks, the Internet network, etc. Communication between the access point and the mobile terminal is effected in a wireless manner on the radio channel. Thus, to reduce the risk of eavesdropping, encryption can be performed, whereby information intended to be transmitted on the radio channel is first encrypted and then transmitted. For encryption, a set of encryption keys is proposed to be established in the HIPERLAN/2 communication system. The keys of this set of encryption keys are used in a predetermined order to encrypt information contained in a data frame to be transmitted each time. The length of the encryption key is *e.g.* 56 bits. This encryption key and a particular encryption algorithm are used to form encrypted information. The encryption algorithm and the set of encryption keys are stored at the access point as well as in the mobile terminals. Thus, the encryption algorithm and the encryption keys do not need to be transmitted over the radio channel, which reduces the risks of uncovering the encryption method and of misuse.

To make the uncovering of the encryption key and the encryption algorithm more difficult, the same encryption key is not used continuously, but the encryption keys is changed at certain intervals. For this reason, such a solution has been proposed for the HIPERLAN/2 system that a so-called encryption number (synchronization seed for the encryption key) is transmitted from the access point to the mobile terminal, on the basis of which the mobile terminal can form the encryption key used in the description. The encryption number (and the encryption key) is always frame-specific; that is, it is changed at intervals of two milliseconds in the HIPERLAN/2 system. However, this encryption number does not need to be transmitted to the mobile terminal for each frame separately, but the arrangement is implemented in such a way that the mobile terminal knows the encryption key sequence and can, on the basis of one encryption number received, find out also the encryption key to be used in the encryption of the next frames. However, this requires that the mobile terminal remains synchronized with the transmission of the access point. If, for any reason, the mobile terminal does not detect all the frames, or the mobile terminal is, for any other reason, no longer synchronized with the transmission of the access point, the mobile terminal does not have correct information on the encryption key. Also in a situation in which the mobile terminal has performed handover, the mobile terminal has no information about the encryption key used by this new access point at each time. For this reason, it has been proposed that the transmission of the encryption number be performed at predetermined intervals, wherein the mobile terminal will be, again, capable of performing encryption/decryption after the mobile terminal has received the new encryption number.

The transmission interval of encryption numbers affects *e.g*. the fact how fast, for example in a handover situation, the mobile terminal is capable of transmitting encrypted information. Thus, the faster the encryption numbers are transmitted, the sooner after a handover the mobile terminal is capable of transmitting and receiving encrypted information. This short transmission interval of the encryption numbers will, however, cause the disadvantage that the communication system is loaded to a relatively great extent by these transmissions of encryption numbers.

A patent US-A-5 546 464 relates to a method of and apparatus for selective resynchronisation in digital cellular communications system. In the system of US-A-5 546 464 a mobile station is communicating with a base station in ciphered manner. When there is a need for hand-off (handover), which may be intra-cell, inter-cell, or inter-system, special tasks need to be performed to enable the continuation of the ciphered communication after hand-off. Intra-cell hand-off is performed in the same cell (the same base station), i.e. only the communication channel is changed. Inter-cell hand-off is performed between two cells of the same system, i.e. the serving base station is changed. Inter-system hand-off is performed between cells of two different cellular networks, i.e. both the serving base station and the network are changed. The old and the new communication channel may or may not be synchronised with each other. If they are synchronised, the ciphered communication can proceed with the same ciphering information. If the channels are not synchronised, the mobile station has to wait until it receives ciphering information from the new channel. In D2 there are disclosed three different procedures to apply in the communication during the time the mobile station waits for the necessary ciphering information.

The first alternative is that the mobile station inhibits the transmission until cipher synchronisation is established with the new channel and then wait for receipt of a block counter message from the new channel.

The second alternative is that the mobile station sets the block counter to a predetermined value which can be a constant or a function of a value known to both the mobile station and the base station. The ciphered transmission can then proceed with this information until cipher synchronisation is established. However, the security level of such ciphered communication is lower during the time the mobile station does not have correct cipher synchronisation.

The third alternative is that the mobile station transmits information with no ciphering at all until cipher synchronisation is established with the new channel.

In all of the above described alternatives the mobile station has to wait until the cipher synchronisation is on transmission stage on the new channel. Hence, the synchronisation procedure can be quite long before the ciphered communication can proceed normally.

It is an aim of the present invention to provide a method and a communication system, whereby the interval of transmitting encryption numbers can be extended and a fast recovery can still be achieved for example in a handover situation and upon failure of synchronization. The invention is based on the idea that the access point transmits the encryption number to the mobile station in connection with the handover. The method according to the present invention is characterized in what will be presented in the characterizing part of the appended claim 1. The communication system according to the present invention is characterized in what will be presented in the characterizing part of the appended claim 8.

With the present invention, significant advantages are achieved when compared with solutions of prior art. Using the method of the invention, it is possible to spread the interval of transmitting encryption numbers and still to perform synchronization with the encryption in a mobile terminal quickly in a handover situation. Because the interval of transmitting the encryption numbers can be spread, also the loading of the communication system is reduced correspondingly, as also the processing required at the access point and in the mobile terminal. Furthermore, the total power consumption of mobile terminals can be reduced, because the mobile terminal is not unnecessarily shifted from a sleep mode to a normal operation mode to receive data frames, in which an encryption number is transmitted to another mobile terminal. Fast synchronization with the encryption also means that in handover situations, disconnections can be avoided better than in communication systems of prior art.

In the following, the present invention will be described in more detail with reference to the appended drawings, in which
- Fig. 1a: shows a communication system according to a preferred embodiment of the invention in a reduced block chart,
- Fig. 1b: shows a data frame in the HIPERLAN/2 system,
- Fig. 2: shows a mobile terminal according to a preferred embodiment of the invention in a reduced block chart,
- Fig. 3: shows an access point and an access point controller according to a preferred embodiment of the invention in a reduced block chart,
- Fig. 4: shows, in a reduced manner, the implementation of the method according to a preferred embodiment of the invention in a data frame format,
- Fig. 5: shows, in a reduced manner, encryption implemented in connection with the method according to a preferred embodiment of the invention in a reduced chart, and
- Fig. 6: shows protocol stacks to be applied in a communication system according to a preferred embodiment of the invention in a reduced manner.

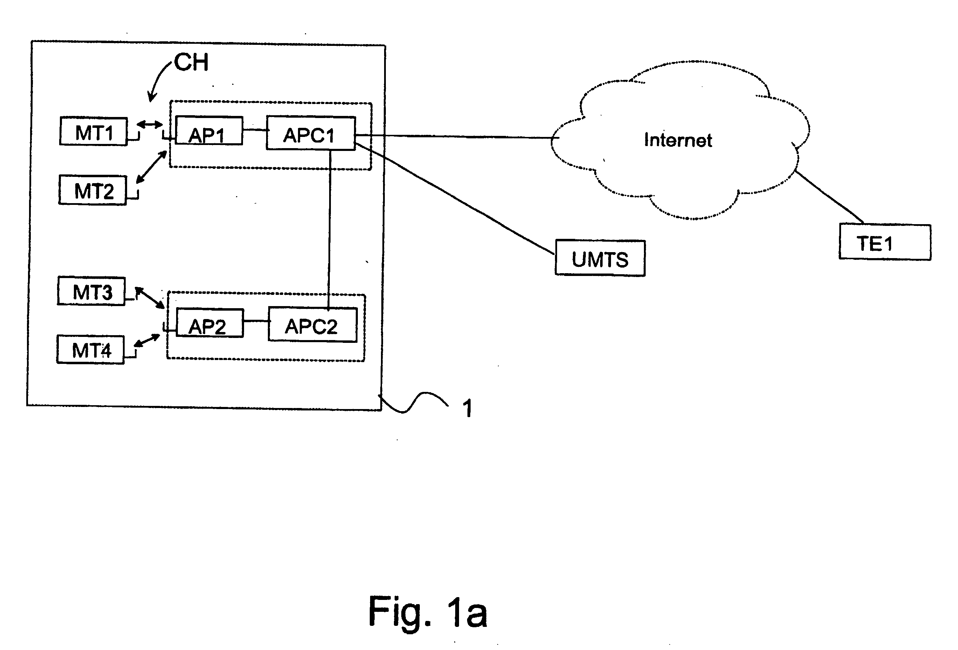

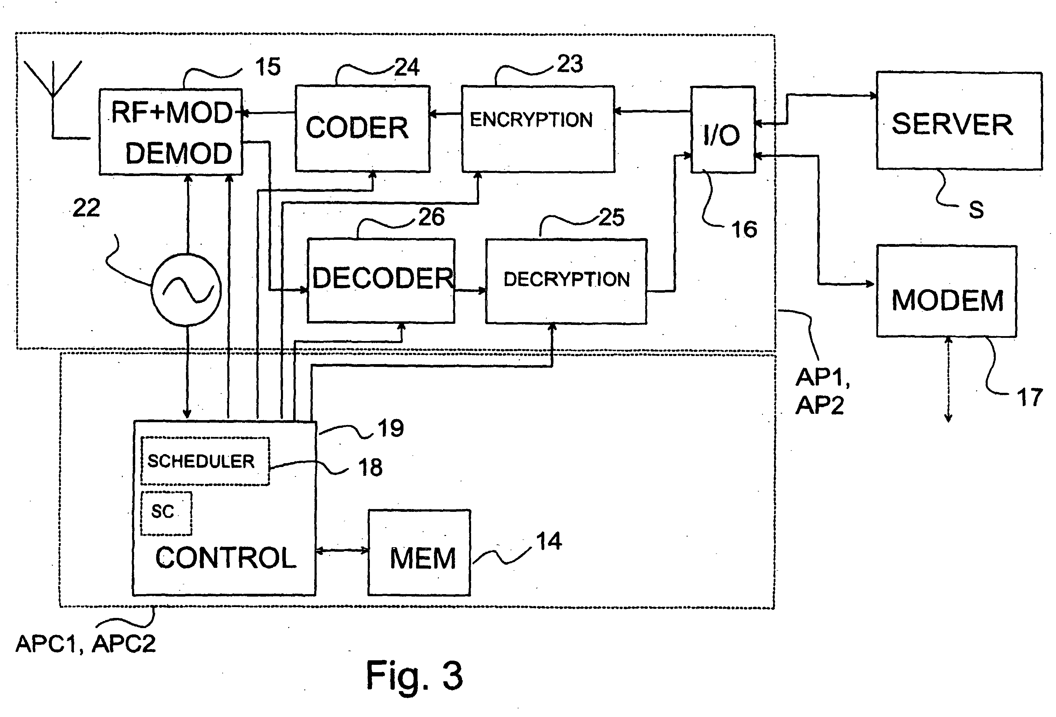

In the following description of a communication system 1 according to a preferred embodiment of the invention, the HIPERLAN/2 system of Fig. 1a will be used as an example, but it is obvious that the invention is not limited solely to this system. The communication system 1 consists of mobile terminals MT1-MT4, one or several access points AP1, AP2, as well as access point controllers APC1, APC2. A radio connection is set up between the access point AP1, AP2 and the mobile station MT1-MT4, for transmitting *e.g*. signals required for setting up a connection and information during the connection, such as data packets of an Internet application. The access point controller APC1, APC2 controls the operation of the access point AP1, AP2 and the connections set up via them to mobile terminals MT1-MT4. The access point controller APC1, APC2 has a controller 19 (Fig. 3), functions of the access point being implemented in its application software, including an access point scheduler for performing various scheduling operations in a way known *per se.* In such a radio network, several access point controllers APC1, APC2 can communicate with each other as well as with other data networks, such as the Internet network, a UMTS mobile communication network (Universal Mobile Terminal System), etc., wherein the mobile terminal MT1-MT4 can communicate *e.g*. with a terminal TE1 coupled to the Internet network. It is obvious that the invention can also be applied in such communication systems which have no access point controller APC1, APC2 but where the corresponding functions are implemented at the access point. AP1, AP2.

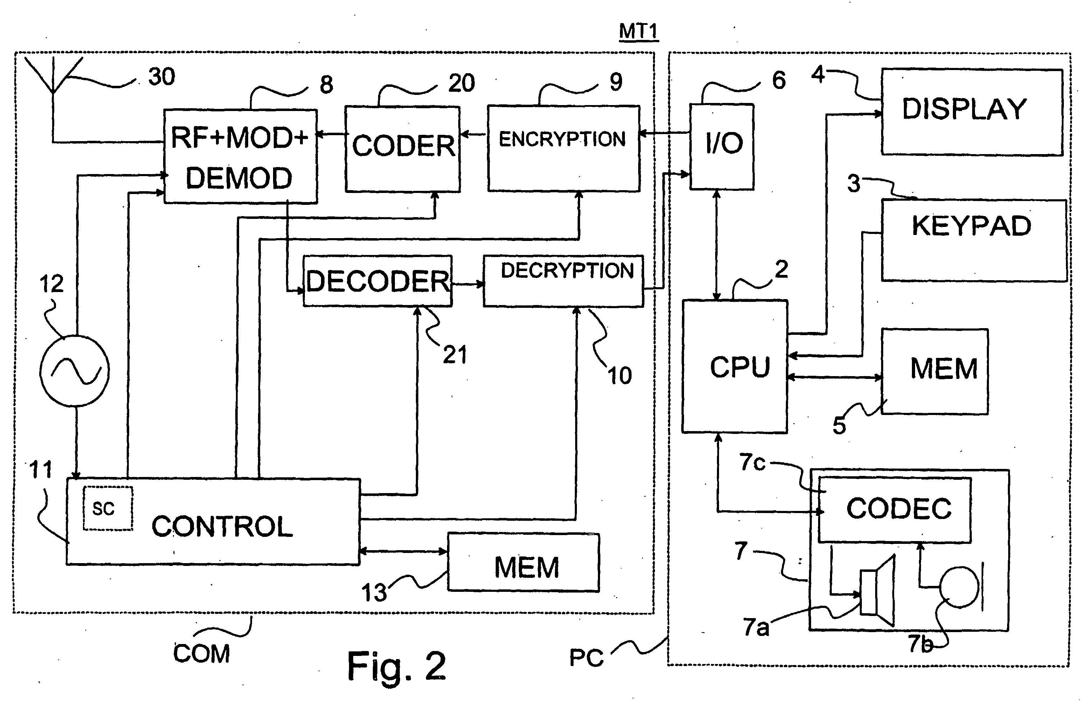

Figure 2 shows, in a reduced block chart, a mobile terminal MT1 complying with a preferred embodiment of the invention. The mobile terminal MT1 preferably comprises data processing functions PC and communication means COM to set up a data transmission connection to a mobile local area network. The mobile terminal can also be formed in such a way that a data processor, such as a portable computer, is connected *e.g.* with an expansion card comprising said communication means COM. The data processing functions PC preferably comprise a processor 2, such as a microprocessor, a microcontroller or the like, a keypad 3, a display means 4, memory means 5, and connection means 6. In addition, the data processing functions PC can comprise audio means 7, such as a speaker 7a, a microphone 7b, and a codec 7c, wherein the user can use the mobile terminal MT1 also *e.g*. for the transmission of speech. Information intended to be transmitted from the mobile terminal MT1 to the local area network is preferably transmitted by the connection means 6 to the communication means COM. In a corresponding manner, information received from the local area network 1 into the mobile terminal MT1 is transmitted to the data processing functions PC via said connection means 6.

The communication means COM comprise *e.g.* an antenna 30, a high-frequency part 8, an encoder 20, a decoder 21, an encryption block 9, a decryption block 10, a control means 11, as well as a reference oscillator 12. The high-frequency part 8 preferably comprises *e.g*. filters, a modulator and a demodulator (not shown). Furthermore, the communication means COM have a memory 13 for example for forming the transmission and receiving buffers required in the data transmission as well as for storing the encryption key table and the encryption sequence. The encoder 20 is used for encoding information contained in data frames. The encoded information is transmitted to the high-frequency part 8 to be modulated and to be transmitted as a radiofrequency signal in the communication channel CH (Fig. 1a). In a corresponding manner, in the decoder, the encoded information received from the communication channel and demodulated in the demodulator is restored preferably into data frame format. The reference oscillator 12 is used to perform the necessary scheduling to synchronize the transmission and reception with the transmission and reception of the access point. The reference oscillator 12 can also be used for generating timing signals for the control means 11, wherein in practical applications, frequency conversion means (not shown) are used to convert the frequency of the reference oscillator 12 into frequencies needed in the radio part and a frequency suitable for controlling the operation of the control means 11.

The access point AP1 (Fig. 3) comprises, in a corresponding manner, first communication means 15, 23-26 for setting up a data transmission connection to mobile terminals MT1-MT4. The local area network according to the invention can also be implemented as a local area network with no connection to external data networks. Thus, one access point AP1 may be sufficient, with which the mobile terminals MT1-MT4 of the local area network communicate. In the mobile local area network, a data transmission connection 16 is preferably arranged from one or several access points AP1, AP2 to a data processor S which is generally called a server computer or, shorter, a server. Such a server comprises, in a way known *per se,* company data files, application software, *etc.* in a centralized manner. The users can thus start up applications installed on the server S via the mobile terminal MT1. The server S or the access point AP1 may also comprise second communication means 17 to set up a data transmission connection to another data network, such as the Internet network or a UMTS mobile communication network.

The communication means of the access point AP1, AP2 comprise one or several oscillators 22 to generate the frequencies needed in the operation, an encryption block 23, a decryption block 25, an encoder 24, a decoder 26, as well as a high-frequency part 15, which are known *per se*.

Each access point AP1, AP2 and mobile terminal MT1-MT4 is allocated an identification, wherein the access point AP1, AP2 is aware of the mobile stations MT1-MT2 coupled to the access point AP1, AP2. In a corresponding manner, on the basis of the identifications, the mobile terminals MT1-MT4 separate the frames transmitted by different access points AP1, AP2 from each other. These identifications can also be used in a situation in which the connection of the mobile terminal MT1-MT4 is handed over from one access point AP1 to another access point AP2, *e.g.* as a result of impaired quality of the connection.

For communication, the mobile terminal MT1 must be coupled in a data transmission connection with the local area network 1. This can be performed preferably in such a way that a network controller, or a corresponding application program is started up in the mobile terminal MT1, containing the program codes for logging in the local area network 1 as well as for transmitting data between the mobile terminal MT1 and the local area network 1. In connection with starting up the network controller, the necessary operations are performed *e.g*. to set up the functional parameters of the communication means COM of the mobile terminal. Thus, the receiver of the communication means COM starts to receive signals at a channel frequency of the local area network. If no signal is detected within a certain time, the channel to be listened to is changed. At the stage when a signal is detected on any channel frequency, the signal received by the receiver of the communication means COM is demodulated and transmitted to be decoded, wherein it is possible to determine the information transmitted in the radio signal, which is known as such. This decoded signal, which is preferably stored in the receiving buffer in the memory 13 of the communication means, is searched for the identifier of the BCCH control field of the data frame. The identifier of this BCCH control field is located at a particular point in the data frame, and therefore, after the identifier is found, the location of the BCCH control field in the receiving buffer is known. The BCCH control field contains for instance the identifier (AP ID) of the access point that has transmitted the frame FR1, the identifier of the local area network (NET ID), the data frame number, the encryption number, the initializing vector, if necessary, as well as information on the length of the FCCH control field, the way of modulation, and encoding.

The mobile terminal MT1 is synchronized with the transmission of this access point AP1. The mobile terminal MT1 requests for connection set-up by transmitting an RACH message to the access point AP1 at a moment of time allocated for the same. For example, in the frame structure according to Fig. 1b, the RACH message can be transmitted after the transmission and reception time slots, before the next BCCH control field. In the message, the mobile terminal MT1 transmits information *e.g*. on the quality of service requested for the connection and on the connection type, such as a multimedia connection, data connection, speech connection. The connection type and the quality of service influence *e.g*. the number of time slots TS1-TSn to be allocated for the connection.

The access point controller APC1 examines the message and finds out, *e.g*. from a resource allocation table or the like, how much resources are available at the time for the access point AP1. If there are sufficient resources to set up a connection corresponding to the requested quality of service, the access point controller APC1 allocates the required resources for the connection. In the memory means 14 of the access point controller APC1, transmission and receiving strings (buffers) are formed for the connection, which are used for temporary storage of received packets and for temporary storage of packets waiting to be transmitted. Furthermore, each connection is allocated a connection identifier, wherein the transmission of data to the correct destination is secured. Also, priority can be selected for the connection, wherein resources available at the time, such as transmission and receiving time slots, are allocated in the order of priority. Depending on *e.g*. the need for resources, it is possible to allocate a different number of time slots TS1-TSn from the data field of the data frame FR for different connections. Also, the number of time slots allocated for transmission and for reception can be different even in the same connection, as already mentioned above in this description. The number of time slots TS1-TSn allocated for connections may also vary according to the frame, wherein in each frame FR, the number of time slots TS1-TSn allocated for the connection may vary from zero to a maximum. The location of the transmission and receiving time slots contained in the data frame is preferably transmitted in the FCCH control field.

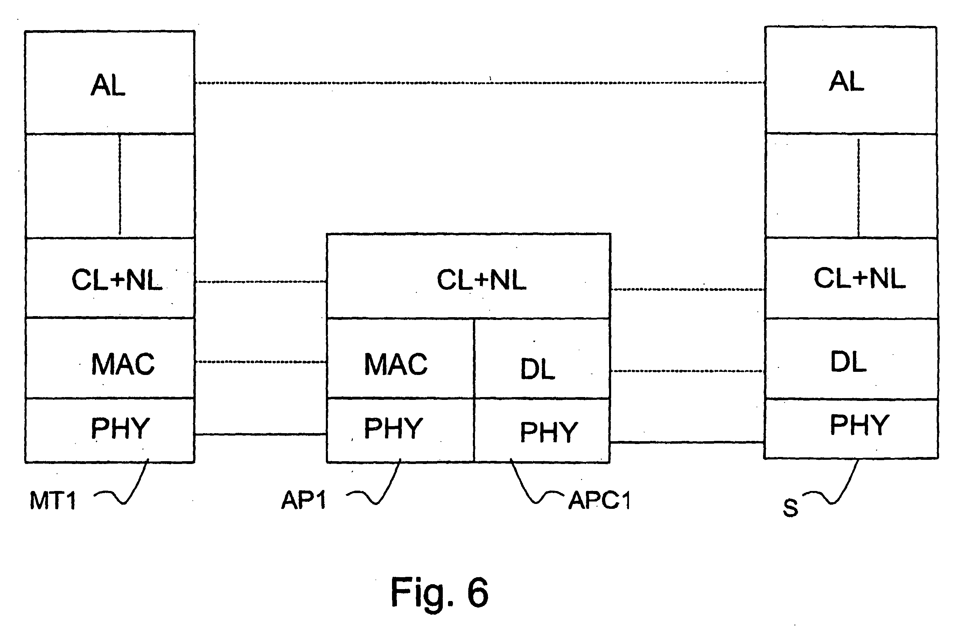

After a connection to the local area network 1 has been set up, it is possible to start data transmission between a server S and a mobile terminal MT1 preferably with a protocol, such as the IP (Internet Protocol). Figure 6 shows this data transmission by means of protocol stacks. Of the protocol stacks, the application layer AL, the convergence layer + network layer CL+NL, the data link layer DL, and the physical layer PHY are presented. On the radio channel, *i*.*e*. between the access point AP1 and the mobile terminal MT1, the data link layer of the protocol stack comprises, in this preferred embodiment, the MAC layer (Media Access Control) as the lowermost layer, which takes care of using the radio channel in communication between the mobile terminal MT1 and the access point AP1, such as encryption and channel allocation in the transmission and reception of packets. This description deals primarily with data frames FR of the MAC layer. It is obvious that encryption operations can also be performed in connection with the other protocol layers, but this is not significant *per se* in view of this invention, wherein they are not discussed in more detail in this context.

A scheduler 18 formed in the access point controller APC1, APC2 performs *e.g*. scheduling of data frames FR of the access point AP1, AP2 and allocation of transmission and receiving time slots for packets of active connections waiting to be transmitted. The scheduler switches the receiver of the access point to receive a radio signal for the time allocated for the RACH field of the frame. Thus, mobile terminals MT1-MT4 can transmit, in addition to the above-presented connection set-up request, various measurement data to the access point.

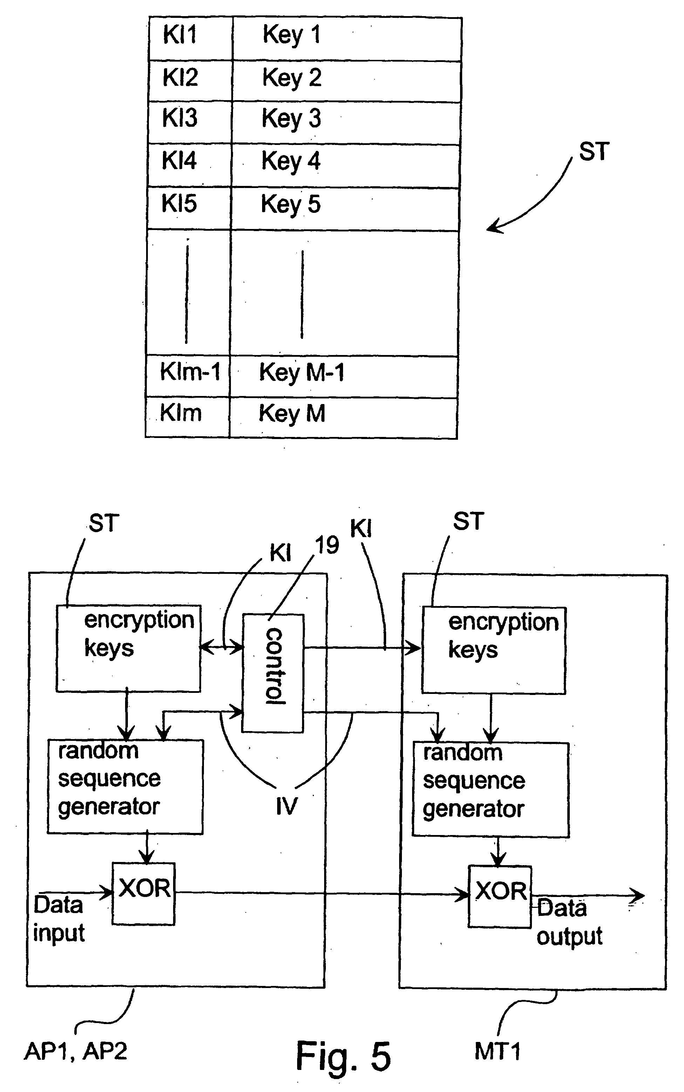

In the following, the operation of the method according to a preferred embodiment of the invention will be described. At the stage when the mobile terminal MT1 has been connected to the first access point AP1 and has received an encryption number KI, the mobile terminal MT1 has set an encryption sequence counter SC (Fig. 2) to a value corresponding to the encryption number. If the encryption number is an index referring to an encryption key table ST, one advantageous example being shown in Fig. 5, the value of the encryption key table ST can be set directly to this encryption number. After this, the mobile terminal MT1 monitors the transmission of the access point AP1 and always in connection with frame change changes the value of the encryption sequence counter in such a way that it preferably indicates the next encryption key in the encryption key table ST. The frame change can be detected in that the access point AP1 transmits the (next) BCCH control field. In connection with receiving this BCCH control field, the mobile terminal MT1 can, if necessary, also perform synchronization of the local clock to keep it synchronized with the access point AP1. After the last encryption key in the encryption table ST, the encryption sequence counter SC is preferably set to indicate the start of the encryption table ST.

In the BCCH field of certain MAC frames, the access point AP1 transmits information to all mobile terminals connected with the access point AP1 in question (broadcast frame) or to some of them (subbroadcast frame). Thus, each of these mobile terminals receives at least the information transmitted in the BCCH field and uses it to find out when information is transmitted to the mobile terminal in question and when it can transmit information. After this, the mobile terminal can possibly shift to a sleep mode to save power, wherein the sleep mode is set to terminate either before the transmission of the next general BCCH control field intended for several mobile terminals, or before the transmission or receiving time slot allocated for the mobile terminal MT1 in question. In the sleep mode, the radio part of the mobile terminal MT1 is set in a power saving mode or turned off. The encryption sequence counter SC can, however, be updated, because the mobile terminal MT1 is aware of the number of MAC frames during which it is in the sleep mode.

Encryption in a communication system according to a preferred embodiment of the invention is presented in the appended Fig. 5 in a reduced chart. An encryption number KI and, if necessary, also an initialization vector IV are transmitted at least once to the mobile terminal MT1. The initialization vector has a certain initial value set for a random sequence generator RS. The initial value for the random sequence generator of the mobile terminal is set in a corresponding manner in the mobile terminal MT1. At the stage when the access point AP1 has information to be transmitted to the mobile terminal, an encryption sequence is formed in the random sequence generator RS on the basis of the encryption key in use at the moment. This encryption sequence is transferred to a combination block XOR in which an Exclusive Or (XOR) operation is preferably performed between the encryption sequence and the information to be transmitted, to produce information encrypted bit by bit. From the combination block XOR, the encrypted information is transferred further to be transmitted in preferably one or several data fields D.

The communication means COM of the mobile terminal MT1 are used to decrypt information received from the communication channel and demodulated in the demodulator, preferably in the following way. In the mobile terminal MT1, the encryption sequence is calculated on the basis of the encryption key, the random sequence generator and the initializing vector in the same way as in the access point AP1. The encrypted information and the encryption sequence are transferred to a separation block XOR', whose output comprises the transmitted information in unencrypted form.

It is obvious that in connection with the present invention, also other methods for encrypting information with an encryption key can be used than that presented above.

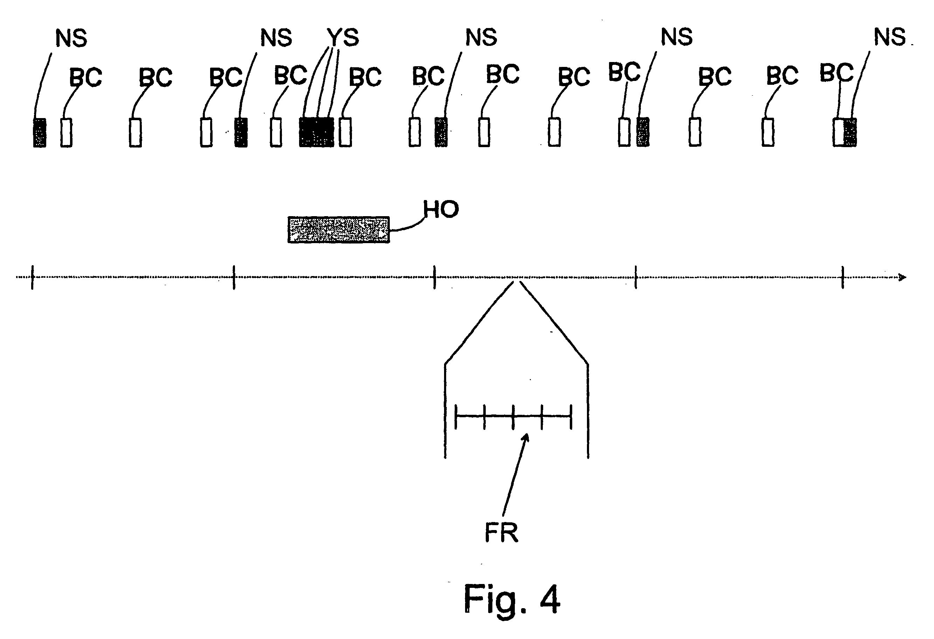

In a situation in which the mobile terminal MT1 hands the connection over to a second access point AP2 or the first access point AP1 performs a forced handover, the mobile terminal MT1 performs the normal handover signalling with this second access point AP2. This is described as a frame indicated with the reference HO in the appended Fig. 4. At this stage, the mobile terminal MT1 can, however, no longer use the encryption number in its memory, because the mobile terminal MT1 does not known which encryption number is used at this second access point AP2 at the moment. The second access point AP2 transmits the encryption number at intervals, but in addition to that, in the method according to the present invention, the access point AP2 will send the encryption key after the handover, because the time until the next transmission of the encryption number can be so long that the connection could even be cut off.

The transmission of the encryption key can be preferably implemented in the following way (Fig. 4). After receiving information about a need to transmit the encryption number, the second access point AP2 selects the next suitable moment for the transmission of the encryption key. The access point AP2 preferably selects such a BCCH control field which is not used as a general BCCH control field mentioned above in this description, indicated as an example with the reference BC in Fig. 4. By this arrangement, receiving operations are not caused unnecessarily and power consumption is not unnecessarily increased in other mobile terminals. The access point AP2 transmits the encryption number at least once, but to secure that the mobile terminal MT1 receives the encryption number correctly, the access point can also retransmit it several times, for example three times in succession. This retransmission may be necessary *e.g*. in such situations in which the mobile terminal MT1 is at the edge of a cell or in another location where the signal strength is decayed. Figure 4 shows, indicated with the reference YS, the transmission of one or more encryption numbers to be transmitted after the handover and, indicated with the reference NS respectively, the normal transmission of the encryption number to be performed at intervals.

The handover can be reported to the access point AP1, AP2 in several different ways. For example, a mobile terminal MT1 communicating with one access point AP1 can transmit a handover request to another access point AP2. In this connection, the mobile terminal MT1 can inform about the handover to the access point AP1 with which it communicates at the moment and from which the connection is handed over to the second access point AP2. Thus, if a data transmission connection is arranged between the access points AP1, AP2, this first access point AP1 can inform the second access point AP2 that there is a need to transmit the encryption numbers more often. Another alternative is that the access point AP1 with which the mobile terminal MT1 communicates at the moment, forces the mobile terminal MT1 to execute the handover. Also in this situation, this first access point AP1 can inform the second access point AP2 that there is a need to transmit the encryption numbers more often.

At the access point AP1, AP2, the operations of the method according to the invention can be preferably implemented in the application software of the controller 19 of the access point controller.

The invention can also be applied in other systems than the HIPERLAN/2 system used in this example. For example in the mobile communication system according to the GSM system (not shown), a base transceiver station corresponds to the access point AP1, AP2, and a base station controller corresponds to the access point controller APC1, APC2, being in radio communication with the mobile terminals via the base stations.

In a corresponding manner, in the WCDMA system (not shown), a node-B corresponds to the access point AP1, AP2 and a radio network controller corresponds to the access point controller APC1, APC2.

Also other than time division multiple access (TDMA) systems are feasible, *e.g*. a code division multiple access (CDMA) system, or a frequency division multiple access (FDMA) system, or a combination of these different systems. Thus, in the code division multiple access system, the feature corresponding to the time slots (transmission sequence) is a code slot, and in the frequency division multiple access system it is a frequency slot.

It is obvious that the present invention is not limited solely to the above-presented embodiments, but it can be modified within the scope of the appended claims.

## Claims

1. A method for transmitting an encryption number in a communication system (1) comprising mobile terminals (MT1-MT4) and at least a first access point (AP1) and a second access point (AP2), the method comprising the steps of:
― defining a set of encryption keys,
― selecting at each said access point (AP1, AP2) from said set of encryption keys one to be used at a time for encrypting information to be transmitted between said access point (AP1, AP2) and mobile terminal (MT1-MT4),
― transmitting from the access point (AP1, AP2), at intervals, data about the encryption key selected at the time,
― setting up a data transmission connection between a mobile terminal (MT1-MT4) and the first access point (AP1) for the transmission of information, and
― performing a mobile originated handover, whereby a data transmission connection is set up between the second access point (AP2) and the mobile terminal (MT1-MT4), and
the mobile terminal (MT1-MT4) informs said second access point (AP2) about a need for handover,
**characterized in that** in the method, said first access point (AP1) transmits information about the handover to said second access point (AP2), wherein in connection with the handover said second access point (AP2) transmits information about the encryption key selected at the second access point (AP2) at the moment to the mobile terminal (MT1-MT4).

2. The method according to claim 1, **characterized in that** each encryption key in said set of encryption keys is allocated an encryption number (KI), wherein said encryption number (KI) is used as said data about the encryption key selected.

3. The method according to claim 1 or 2, in which information is transmitted in data frames (FR), **characterized in that** the encryption key is changed in connection with each data frame (FR).

4. The method according to claim 3, in which some of the data frames are used as common data frames for transmitting information from the second access point (AP2) to more than one mobile terminal (MT1-MT4), **characterized in that** said data about the encryption key is transmitted in another data frame than said common data frame.

5. The method according to any of the claims 1 to 4, **characterized in that** said set of encryption keys is stored in said access points (AP1, AP2) and in the mobile terminal (MT1-MT4).

6. The method according to any of the claims 1 to 5, **characterized in that** the mobile terminal (MT1-MT4) informs said first access point (AP1) about a need for handover.

7. The method according to any of the claims 1 to 5, **characterized in that** the first access point (AP1) executes a forced handover, in which the mobile terminal (MT1-MT4) communicating with said first access point is transferred to communicate with said second access point (AP2).

8. A mobile communication system (1) comprising mobile terminals (MT1-MT4), at least a first access point (AP1) and a second access point (AP2); a set of encryption keys being defined in the communication system (1); the access point (AP1, AP2) comprising means for selecting from said set of encryption keys one at a time to be used for encryption of information to be transmitted between said access point (AP1, AP2) and mobile terminal (MT1-MT4), and means for transmitting information about the encryption key selected at the time at intervals from the access point (AP1, AP2); the communication system (1) also comprising means for setting up a data transmission connection between the mobile terminal (MT1-MT4) and the first access point (AP1) for the transmission of information, and means for executing a mobile originated handover and setting up a data transmission connection between the second access point (AP2) and the mobile terminal (MT1-MT4), and the mobile terminal (MT1-MT4) comprises means (8, 11, 30) for informing said second access point (AP2) about the need for a handover, **characterized in that** the mobile communication system (1) also comprises means for transmitting information about the handover to said second access point (AP2), and means for transmitting information about the encryption key selected at the second access point (AP2) to the mobile terminal (MT1-MT4), wherein in connection with the handover data is arranged to be transmitted from said second access point (AP2) to the mobile terminal (MT1-MT4) about the encryption key selected at the second access point (AP2) at the time.

9. The mobile communication system (1) according to claim 8, **characterized in that** it also comprises means for defining an encryption number for each encryption key in said set of encryption keys (ST), wherein said encryption number (KI) is arranged to be used as said information about the encryption key selected.

10. The mobile communication system (1) according to claim 8 or 9, which comprises means for transmitting information in data frames (FR), **characterized in that** the encryption key is arranged to be changed in connection with each data frame (FR).

11. The mobile communication system (1) according to claim 10, in which some of the data frames are arranged to be used as common data frames for transmitting information from one access point (AP2) to more than one mobile terminal (MT1-MT4), **characterized in that** said data about the encryption key is arranged to be transmitted in another data frame than said common data frame.

12. The mobile communication system (1) according to any of the claims 8 to 11, **characterized in that** said set of encryption keys is stored at said access points (AP1, AP2) and mobile terminal (MT1-MT4).

13. The mobile communication system (1) according to any of the claims 8 to 12, **characterized in that** the mobile terminal (MT1-MT4) comprises means (8, 11, 30) for informing said first access point (AP1) about the need for handover,

14. The mobile communication system (1) according to any of the claims 8 to 12, **characterized in that** the first access point (AP1) comprises means for performing a forced handover, wherein the mobile terminal (MT1-MT4) communicating with said first access point is arranged to be handed over to communicate with said second access point (AP2).

## Patentansprüche

1. Verfahren zum Übertragen einer Verschlüsselungszahl in einem Kommunikationssystem (1), das mobile Terminals (MT1 - MT4) und mindestens einen ersten Zugangspunkt (AP1) und einen zweiten Zugangspunkt (AP2) umfasst, wobei das Verfahren die Schritte umfasst:
- Definieren eines Satzes von Verschlüsselungscodes,
- Auswählen eines Codes in jedem Zugangspunkt (AP1, AP2) aus dem Satz von Verschlüsselungscodes, der zu einer Zeit zum Verschlüsseln von Informationen zu verwenden ist, die zwischen dem Zugangspunkt (AP1, AP2) und dem mobilen Terminal (MT1 - MT4) zu übertragen sind,
- Übertragen der Daten über den Verschlüsselungscode, der zu der Zeit ausgewählt wurde, in Intervallen von dem Zugangspunkt (AP1, AP2),
- Aufbauen einer Datenübertragungsverbindung zwischen einem mobilen Terminal (MT1 - MT4) und dem ersten Zugangspunkt (AP1) zur Übertragung von Informationen und
- Durchführen eines abgehenden Handover, wodurch eine Datenübertragungsverbindung zwischen dem zweiten Zugangspunkt (AP2) und dem mobilen Terminal (MT1 - MT4) aufgebaut wird, und
das mobile Terminal (MT1 - MT4) den zweiten Zugangspunkt (AP2) über eine Notwendigkeit zum Handover informiert, **dadurch gekennzeichnet, dass** in dem Verfahren der erste Zugangspunkt (AP1) Informationen über das Handover an den zweiten Zugangspunkt (AP2) überträgt, wobei in Verbindung mit dem Handover der zweite Zugangspunkt (AP2) Informationen über den Verschlüsselungscode, der in dem zweiten Zugangspunkt (AP2) gerade ausgewählt wurde, an das mobile Terminal (MT1 - MT4) überträgt.

2. Verfahren nach Anspruch 1, **dadurch gekennzeichnet, dass** jedem Verschlüsselungscode in dem Satz von Verschlüsselungscodes eine Verschlüsselungszahl (KI) zugewiesen wird, wobei die Verschlüsselungszahl (KI) als Daten über den ausgewählten Verschlüsselungscode verwendet wird.

3. Verfahren nach Anspruch 1 oder 2, in welchem Informationen in den Datenrahmen (FR) übertragen werden, **dadurch gekennzeichnet, dass** der Verschlüsselungscode in Verbindung mit jedem Datenrahmen (FR) geändert wird.

4. Verfahren nach Anspruch 3, in welchem einige der Datenrahmen als gemeinsamer Datenrahmen zur Übertragung von Informationen von dem zweiten Zugangspunkt (AP2) an mehr als ein mobiles Terminal (MT1 - MT4) verwendet werden, **dadurch gekennzeichnet, dass** die Daten über den Verschlüsselungscode in einem anderen Datenrahmen als dem gemeinsamen Datenrahmen übertragen werden.

5. Verfahren nach einem der Ansprüche 1 bis 4, **dadurch gekennzeichnet, dass** der Satz von Verschlüsselungscodes in den Zugangspunkten (AP1, AP2) und in dem mobilen Terminal (MT1 - MT4) gespeichert wird.

6. Verfahren nach einem der Ansprüche 1 bis 5, **dadurch gekennzeichnet, dass** das mobile Terminal (MT1 - MT4) den ersten Zugangspunkt (AP1) über eine Notwendigkeit zum Handover informiert.

7. Verfahren nach einem der Ansprüche 1 bis 5, **dadurch gekennzeichnet, dass** der erste Zugangspunkt (AP1) ein erzwungenes Handover ausführt, in welchem das mobile Terminal (MT1 - MT4), das mit dem ersten Zugangspunkt kommuniziert, übergeben wird, um mit dem zweiten Zugangspunkt (A2) zu kommunizieren.

8. Mobiles Kommunikationssystem (1), umfassend: mobile Terminals (MT1 - MT4), mindestens einen ersten Zugangspunkt (AP1) und einen zweiten Zugangspunkt (AP2); einen Satz von Verschlüsselungscodes, der in dem Kommunikationssystem (1) definiert wird; den Zugangspunkt (AP1, AP2), der Mittel zum Auswählen eines Codes aus dem Satz von Verschlüsselungscodes zu einer Zeit, der zur Verschlüsselung von Informationen zu verwenden ist, die zwischen dem Zugangspunkt (AP1, AP2) und dem mobilen Terminal (MT1 - MT4) zu übertragen sind, und Mittel zur Übertragung von Informationen über den zu der Zeit ausgewählten Verschlüsselungscode in Intervallen von dem Zugangspunkt (AP1, AP2) umfasst; das Kommunikationssystem (1), das ebenfalls Mittel zum Aufbauen einer Datenübertragungsverbindung zwischen dem mobilen Terminal (MT1 - MT4) und dem ersten Zugangspunkt (AP1) zur Übertragung von Informationen und Mittel zum Ausführen eines mobil entstammenden Handover und zum Aufbauen einer Datenübertragungsverbindung zwischen dem zweiten Zugangspunkt (AP2) und dem mobilen Terminal (MT1 - MT4) umfasst, und wobei das mobile Terminal (MT1 - MT4) Mittel (8, 11, 30) zum Informieren des zweiten Zugangspunktes (AP2) über die Notwendigkeit zu einem Handover umfasst, **dadurch gekennzeichnet, dass** das mobile Kommunikationssystem (1) ebenfalls Mittel zur Übertragung von Informationen über das Handover an den zweiten Zugangspunkt (AP2) und Mittel zur Übertragung von Informationen über den Verschlüsselungscode, der in dem zweiten zugangspunkt (AP2) ausgewählt wurde, an das mobile Terminal (MT1 - MT4) umfasst, wobei in Verbindung mit dem Handover die Daten so angeordnet werden, dass sie von dem zweiten Zugangspunkt (AP2) an das mobile Terminal (MT1 - MT4) über den Verschlüsselungscode, der in dem zweiten Zugangspunkt (AP2) zu der Zeit ausgewählt wurde, übertragen werden.

9. Mobiles Kommunikationssystem (1) nach Anspruch 8, **dadurch gekennzeichnet, dass** es ebenfalls Mittel zum Definieren einer Verschlüsselungszahl für jeden Verschlüsselungscode in dem Satz von Verschlüsselungscodes (ST) umfasst, wobei die Verschlüsselungszahl (KI) so angeordnet wird, dass sie als Informationen über den ausgewählten Verschlüsselungscode verwendet wird.

10. Mobiles Kommunikationssystem (1) nach Anspruch 8 oder 9, welches Mittel zur Übertragung von Informationen in Datenrahmen (FR) umfasst, **dadurch gekennzeichnet, dass** der Verschlüsselungscode so angeordnet wird, dass er in Verbindung mit jedem Datenrahmen (FR) geändert wird.

11. Mobiles Kommunikationssystem (1) nach Anspruch 10, in welchem einige Datenrahmen so angeordnet werden, dass sie als gemeinsame Datenrahmen zur Übertragung von Informationen von einem Zugangspunkt (AP2) an mehr als ein mobiles Terminal (MT1 - MT4) verwendet werden, **dadurch gekennzeichnet, dass** die Daten über den Verschlüsselungscode so angeordnet werden, dass sie in einem anderen Datenrahmen als dem gemeinsamen Datenrahmen übertragen werden.

12. Mobiles Kommunikationssystem (1) nach einem der Ansprüche 8 bis 11 **dadurch gekennzeichnet, dass** der Satz von Verschlüsselungscodes in den Zugangspunkten (AP1, AP2) und dem mobilen Terminal (MT1 - MT4) gespeichert wird.

13. Mobiles Kommunikationssystem (1) nach einem der Ansprüche 8 bis 12 **dadurch gekennzeichnet, dass** das mobile Terminal (MT1 - MT4) Mittel (8, 11, 30) zum Informieren des ersten Zugangspunktes (AP1) über die Notwendigkeit zum Handover umfasst.

14. Mobiles Kommunikationssystem (1) nach einem der Ansprüche 8 bis 12 **dadurch gekennzeichnet, dass** der erste Zugangspunkt (AP1) Mittel zum Durchführen eines erzwungenen Handover umfasst, wobei das mobile Terminal (MT1 - MT4), das mit dem ersten Zugangspunkt kommuniziert, so angeordnet wird, dass es übergeben wird, um mit dem zweiten Zugangspunkt (AP2) zu kommunizieren.

## Revendications

1. Procédé pour transmettre un numéro de clé de chiffrage dans un système de communication (1) comprenant des terminaux mobiles (MT1 à MT4) et au moins un premier point d'accès (AP1) et un second point d'accès (AP2), le procédé comprenant les étapes consistant :
- définir un ensemble de clés de chiffrage,
- sélectionner à chacun desdits points d'accès (AP1, AP2) depuis ledit ensemble des clés de chiffrage celle qui doit être utilisée au moment du chiffrage des informations qui doivent être transmises entre ledit point d'accès (AP1, AP2) et le terminal mobile (MT1 à MT4),
- transmettre depuis le point d'accès (AP1, AP2), à des intervalles, les données concernant la clé de chiffrage sélectionnée à cet instant,
- établir une connexion de transmission de données entre un terminal mobile (MT1 à MT4) et le premier point d'accès (AP1) pour la transmission des informations, et
- effectuer une commutation à l'origine du mobile, avec pour effet qu'une connexion de transmission de données est établie entre le second point d'accès (AP2) et le terminal mobile (MT1 à MT4), et
**caractérisé en ce que** dans le procédé, le terminal mobile (MT1 à MT4) informe ledit second point d'accès (AP2) concernant la nécessité d'une commutation, **caractérisé en ce que** dans le procédé, ledit premier point d'accès (AP1) transmet des informations concernant la commutation audit second point d'accès (AP2), dans lesquels en liaison avec ladite commutation ledit second point d'accès (AP2) transmet les informations concernant la clé de chiffrage sélectionnée au second point d'accès (AP2) à ce moment au terminal mobile (MT1 à MT4).

2. Procédé selon la revendication 1, **caractérisé en ce que** chaque clé de chiffrage dans ledit ensemble des clés de chiffrage reçoit un numéro de chiffrage (KI) dans lequel le dit numéro de chiffrage (KI) est utilisé comme lesdites données concernant la clé de chiffrage sélectionnée.

3. Procédé selon la revendication 1 ou 2, dans lequel les informations sont transmises dans des trames de données (FR), **caractérisé en ce que** la clé de chiffrage est changée en liaison avec chaque trame de données (FR).

4. Procédé selon la revendication 3, dans lequel certaines des trames de données sont utilisées comme trames de données communes pour transmettre des informations depuis le second point d'accès (AP2) à plus qu'un terminal mobile (MT1 à MT4), **caractérisé en ce que** lesdites données concernant la clé de chiffrage sont transmises dans une autre trame de données que ladite trame de données commune.

5. Procédé selon l'une quelconque des revendications 1 à 4, **caractérisé en ce que** ledit ensemble des clés de chiffrage est mémorisé dans lesdits points d'accès (AP1, AP2) et dans le terminal mobile (MT1 à MT4).

6. Procédé selon l'une quelconque des revendications 1 à 5, **caractérisé en ce que** le terminal mobile (MT1 à MT4) informe ledit premier point d'accès (AP1) concernant la nécessité de la commutation.

7. Procédé selon l'une quelconque des revendications 1 à 5, **caractérisé en ce que** le premier point d'accès (AP1) exécute une commutation forcée, dans lequel le terminal mobile (MT1 à MT4) communiquant avec ledit premier point d'accès est transféré pour communiquer avec ledit second point d'accès (AP2).

8. Système de communication mobile (1) comprenant des terminaux mobiles (MT1 à MT4), au moins un premier point d'accès (AP1) et un second point d'accès (AP2) ; un ensemble de clés de chiffrage étant défini dans le système de communication (1) ; le point d'accès (AP1), (AP2) comprenant un moyen pour sélectionner depuis ledit ensemble des clés de chiffrage celle qui doit être utilisée à ce moment pour le chiffrage des informations qui doivent être transmises entre ledit point d'accès (AP1), (AP2) et le terminal mobile (MT1 à MT4), et un moyen pour transmettre ces informations concernant la clé de chiffrage sélectionnée à ce moment à des intervalles depuis le point d'accès (AP1), (AP2) ; le système de communication (1) comprenant également un moyen pour établir une connexion de transmission de données entre le terminal mobile (MT1 à MT4) et le premier point d'accès (AP1) pour la transmission des informations, et un moyen pour exécuter une commutation à l'origine du mobile et pour établir une connexion de transmission de données entre le second point d'accès (AP2) et le terminal mobile (Mt1 à MT4), et le terminal mobile (MT1 à MT4) comprend un moyen (8, 11, 30) pour informer ledit second point d'accès (AP2) concernant la nécessité d'une commutation, **caractérisé en ce que** le système de communication mobile (1) comprend également un moyen pour transmettre des informations concernant la commutation sur ledit second point d'accès (AP2), et un moyen pour transmettre des informations concernant la clé de chiffrage sélectionnée au niveau du second point d'accès (AP2) au terminal mobile (MT1 à MT4), dans lequel en liaison avec la commutation, les données sont conçues pour être transmises depuis le second point d'accès au terminal mobile (MT1 à MT4) concernant la clé de chiffrage sélectionnée à ce moment au second point d'accès (AP2).

9. Système de communication mobile (1), selon la revendication 8, **caractérisé en ce qu'**il comprend également un moyen pour définir un numéro de chiffrage pour chaque clé de chiffrage dans ledit ensemble des clés de chiffrage (ST), dans lequel ledit numéro de chiffrage (KI) est conçu pour être utilisé comme ladite information concernant la clé de chiffrage sélectionnée.

10. Système de communication mobile (1) selon la revendication 8 ou 9, qui comprend un moyen pour transmettre les informations dans des trames de données (FR) **caractérisé en ce que** la clé de chiffrage est conçue pour être changée en liaison avec chaque trame de données (FR).

11. Système de communication mobile (1) selon la revendication 10, dans lequel certaines des trames de données sont conçues pour être utilisées comme trames de données communes pour transmettre des informations depuis un point d'accès (AP2) à plus qu'un terminal mobile (MT1 à MT4), **caractérisé en ce que** lesdites données concernant la clé de chiffrage sont conçues pour être transmises dans une autre trame de données que ladite trame de données commune.

12. Système de communication mobile (1) selon l'une quelconque des revendications 8 à 11, **caractérisé en ce que** ledit ensemble des clés de chiffrage est mémorisé au niveau desdits points d'accès (AP1) et (AP2) et dudit terminal mobile (MT1 à MT4).

13. Système de communication mobile (1) selon l'une quelconque des revendications 8 à 12, **caractérisé en ce que** le terminal mobile (MT1 à MT4) comprend un moyen (8, 11, 30) pour informer ledit premier point d'accès (AP1) concernant la nécessité d'une commutation.

14. Système de communication mobile (1) selon l'une quelconque des revendications 8 à 12, **caractérisé en ce que** le premier point d'accès (AP1) comprend un moyen pour effectuer une commutation forcée, dans lequel le terminal mobile (MT1 à MT4) communiquant avec ledit premier point d'accès est conçu pour être commuté pour communiquer avec ledit second point d'accès (AP2).
